# EUROPEAN PATENT APPLICATION

(11) **EP 4 769 590 A1**
(43) Date of publication of application: **01.07.2026**
(21) Application number: 24929889.4
(22) Date of filing: 19.12.2024
(51) Int. Cl.: H01M 10/04, H01M 50/609, H01M 50/105

(54) **APPARATUS AND METHOD FOR MANUFACTURING SECONDARY BATTERY**

(30) Priority: 12.03.2024 KR 20240034635; 08.07.2024 KR 20240089908
(71) Applicant: LG Energy Solution, Ltd., Seoul 07335 (KR)
(72) Inventor: PARK, Hyeon Uk, Daejeon 34122 (KR); KIM, Dae Hong, Daejeon 34122 (KR)
(74) Representative: Goddar, Heinz J.
(86) International application number: PCT/KR2024/020685
(87) International publication number: WO 2025/192831

(57) **Abstract**

The present disclosure relates to a secondary battery manufacturing apparatus, and the secondary battery manufacturing apparatus according to an aspect of the present disclosure is an secondary battery manufacturing apparatus for manufacturing a secondary battery from a semi-assembly including a case having an accommodation space and an electrode assembly disposed in the accommodation space, and may include a support unit configured to support the semi-assembly; an injection unit configured to inject an electrolyte solution into the accommodation space; and a first movement unit configured to move the semi-assembly and the injection unit in relation to each other while the electrolyte solution is poured from the injection unit into the accommodation space.

## Description

### TECHNICAL FIELD

### CROSS-REFERENCE TO RELATED APPLICATIONS

The present application claims priority to Korean Patent Application No. 10-2024-0034635 filed on March 12, 2024 and Korean Patent Application No. 10-2024-0089908 filed on July 8, 2024 in the Republic of Korea, the disclosures of which are incorporated herein by reference.

### TECHNICAL FIELD

The present disclosure relates to an apparatus and method for manufacturing a secondary battery, and more particularly, to a secondary battery manufacturing apparatus and method for manufacturing a pouch-type secondary battery.

### BACKGROUND ART

Secondary batteries have been used in small-scale applications including mobile devices or laptop computers, but recently the direction of research is expanding to medium- and large-scale applications, and secondary batteries are being widely used in the industrial applications requiring high voltage and large capacity including Energy Storage Systems (ESSs) or Electric Vehicles (EVs). Secondary batteries may be variously classified on the basis of shape or structure. For example, secondary batteries may be classified into prismatic secondary batteries, cylindrical secondary batteries and pouch-type secondary batteries according to the shapes of cases where electrodes are accommodated.

A pouch-type secondary battery is a secondary battery including a case made by forming a sheet having flexibility into a pouch shape. The pouch-shaped case has an accommodation space that may be isolated from the outside. The pouch-type secondary battery may be manufactured by putting electrodes and an electrolyte solution in the accommodation space and sealing the case.

In the process of manufacturing the secondary battery, the electrodes are impregnated with the electrolyte solution. The electrolyte solution acts as a medium for the movement of ions between the electrodes. When the electrolyte solution evenly infiltrates into every part of the electrode, the secondary battery may have good performance and stability. To this end, there has been an urgent need for development of a secondary battery manufacturing apparatus and method for effective impregnation of the electrode assembly accommodated in the case.

### SUMMARY

### TECHNICAL PROBLEM

The present disclosure is designed to solve the above-described problems, and therefore the present disclosure is directed to providing a secondary battery manufacturing apparatus and method for effective impregnation of an electrode assembly accommodated in a case.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, there is provided a secondary battery manufacturing apparatus for manufacturing a secondary battery with a semi-assembly including a case having an accommodation space and an electrode assembly disposed in the accommodation space, the secondary battery manufacturing apparatus including a support unit configured to support the semi-assembly; an injection unit configured to inject an electrolyte solution into the accommodation space; and a first movement unit configured to move the semi-assembly and the injection unit in relation to each other while the electrolyte solution is poured from the injection unit into the accommodation space.

In this instance, when the injection unit injects the electrolyte solution, the first movement unit may move at least one of the injection unit or the semi-assembly so that the injection unit and an opening of the case get closer to each other.

In this instance, the injection unit may start to inject the electrolyte solution in such a state in which the injection unit is disposed closer to a bottom-side part of the electrode assembly than an opening-side part, the opening-side part may be a part facing the opening of the case, and the bottom-side part may be another part opposite the opening-side part, the bottom-side part contacting or facing the bottom surface of the accommodation space.

In this instance, the secondary battery manufacturing apparatus may further include a suction unit configured to widen a gap between an inner surface of the case and the electrode assembly so that the injection unit is inserted between the inner surface of the case and the electrode assembly.

In this instance, the injection unit may include first and second injection units arranged with the electrode assembly interposed therebetween.

In this instance, the secondary battery manufacturing apparatus may further include a press unit configured to apply pressure to an outer surface of the case toward the electrode assembly so that the electrolyte solution injected from the injection unit infiltrates into the electrode assembly.

In this instance, the press unit may apply pressure to the outer surface of the case at a location between the injection unit and a bottom surface of the accommodation space.

In this instance, the press unit may include first and second press units applying pressure to two sides of the case, respectively.

In this instance, the first movement unit may be configured to move the press unit and the semi-assembly in relation to each other.

In this instance, the secondary battery manufacturing apparatus may further include a second movement unit configured to move the press unit and the semi-assembly in relation to each other.

In this instance, the second movement unit may move at least one of the press unit or the semi-assembly so that the press unit and an opening of the case get closer to each other.

According to another aspect of the present disclosure, there is provided a secondary battery manufacturing apparatus for manufacturing a secondary battery with a semi-assembly including a case having an accommodation space and an electrode assembly disposed in the accommodation space, the secondary battery manufacturing apparatus including a support unit configured to support the semi-assembly; an injection unit configured to inject an electrolyte solution into the accommodation space; a press unit configured to apply pressure to an outer surface of the case toward the electrode assembly so that the electrolyte solution injected from the injection unit into the accommodation space infiltrates into the electrode assembly; and a second movement unit configured to move the press unit and the semi-assembly in relation to each other while the pressure is applied to the case by the press unit.

According to still another aspect of the present disclosure, there is provided a secondary battery manufacturing method including the steps of providing a semi-assembly including a case having an accommodation space and an electrode assembly disposed in the accommodation space; placing an injection unit in the accommodation space through an opening of the case; and moving the injection unit and the semi-assembly in relation to each other while an electrolyte solution is poured from the injection unit.

In this instance, the step of moving the injection unit and the semi-assembly in relation to each other may include moving in a direction in which the injection unit and the opening of the case get closer to each other.

In this instance, at the step of placing the injection unit in the accommodation space, the injection unit may be disposed closer to a bottom-side part of the electrode assembly than an opening-side part, the opening-side part may be a part facing the opening of the case, and the bottom-side part may be another part opposite the opening-side part, the bottom-side part contacting or facing the bottom surface of the accommodation space.

In this instance, the secondary battery manufacturing method may further include the step of widening a gap between an inner surface of the case and the electrode assembly, and the step of placing the injection unit in the accommodation space may include placing the injection unit between the inner surface of the case and the electrode assembly.

In this instance, the secondary battery manufacturing method may further include the step of applying, by a press unit, pressure to an outer surface of the case toward the electrode assembly so that the electrolyte solution injected from the injection unit infiltrates into the electrode assembly.

In this instance, the press unit may include a first press unit and a second press unit, and the step of applying pressure to the outer surface of the case may include applying, by the first press unit and the second press unit, pressure to two sides of the case, respectively.

In this instance, at the step of moving the injection unit and the semi-assembly in relation to each other, the press unit may be moved in relation to the semi-assembly while applying pressure to the case.

In this instance, the secondary battery manufacturing method may further include the step of moving the press unit and the semi-assembly in relation to each other while pressure is applied to the case by the press unit.

In this instance, the step of moving the press unit and the semi-assembly in relation to each other may start simultaneously with or after the start of the step of moving the injection unit and the semi-assembly in relation to each other.

According to yet another aspect of the present disclosure, there is provided a secondary battery manufacturing method including the steps of providing a semi-assembly including a case having an accommodation space and an electrode assembly disposed in the accommodation space; injecting an electrolyte solution into the accommodation space through an opening of the case; applying, by a press unit, pressure to an outer surface of the case toward the electrode assembly so that the electrolyte solution injected into the accommodation space infiltrates into the electrode assembly; and moving the press unit and the semi-assembly in relation to each other while the pressure is applied to the case by the press unit.

### ADVANTAGEOUS EFFECTS

According to an aspect of the present disclosure, while the electrolyte solution from the injection unit disposed in the accommodation space in which the electrode assembly is accommodated is poured into the accommodation space, the injection unit and the semi-assembly may be moved in relation to each other. Accordingly, the electrolyte solution may be evenly filled in the accommodation space, thereby achieving effective impregnation of the electrode assembly.

According to another aspect of the present disclosure, while the press unit applies pressure to the outer surface of the case accommodating the electrode assembly, the press unit and the semi-assembly may be moved in relation to each other. Accordingly, the electrolyte solution in the accommodation space may be evenly subjected to pressure toward the electrode assembly, thereby achieving effective impregnation of the electrode assembly.

The effects of the present disclosure are not limited to the aforementioned effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view of a semi-assembly that is used to manufacture a secondary battery by a secondary battery manufacturing apparatus according to an embodiment of the present disclosure when viewed from above.
FIG. 2 is a diagram schematically showing a secondary battery manufacturing apparatus and a semi-assembly according to an embodiment of the present disclosure. In this instance, the semi-assembly is shown in cross section to make the inside visible.
FIG. 3 is a schematic block diagram of a secondary battery manufacturing apparatus according to an embodiment of the present disclosure.
FIG. 4 is a diagram schematically showing that an injection unit of a secondary battery manufacturing apparatus according to another embodiment of the present disclosure is disposed in an accommodation space. In this instance, a semi-assembly is shown in cross section to make the inside visible.
FIG. 5 is a flowchart of a secondary battery manufacturing method according to an embodiment of the present disclosure.
FIG. 6 is a diagram schematically showing a process in which a grip unit of a secondary battery manufacturing apparatus according to an embodiment of the present disclosure spreads a case apart. In this instance, a semi-assembly is shown in cross section to make the inside visible.
FIG. 7 is a diagram schematically showing a process in which an injection unit of a secondary battery manufacturing apparatus according to an embodiment of the present disclosure is inserted into an accommodation space. In this instance, a semi-assembly is shown in cross section to make the inside visible.
FIG. 8 is a diagram schematically showing a process in which an impregnation solution is poured into an accommodation space from an injection unit of a secondary battery manufacturing apparatus according to an embodiment of the present disclosure and a press unit applies pressure to a case. In this instance, a semi-assembly is shown in cross section to make the inside visible.
FIGS. 9 and 10 are diagrams schematically showing a process in which a movement unit of a secondary battery manufacturing apparatus according to an embodiment of the present disclosure moves an injection unit, a press unit and a semi-assembly in relation to each other. In this instance, the semi-assembly is shown in cross section to make the inside visible.
FIG. 11 is a diagram schematically showing a process in which an injection unit and a press unit of a secondary battery manufacturing apparatus according to an embodiment of the present disclosure are moved away from a semi-assembly. In this instance, the semi-assembly is shown in cross section to make the inside visible.

### DETAILED DESCRIPTION

The exemplary embodiments of the present disclosure will be described in sufficient detail to enable those skilled in the art to easily carry out the present disclosure. However, the present disclosure may be embodied in many different forms and is not restricted or limited to the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, and rather, should be interpreted based on the meanings and concepts corresponding to the technical aspect of the present disclosure on the basis of the principle that the inventor is allowed to define the terms appropriately for the best explanation.

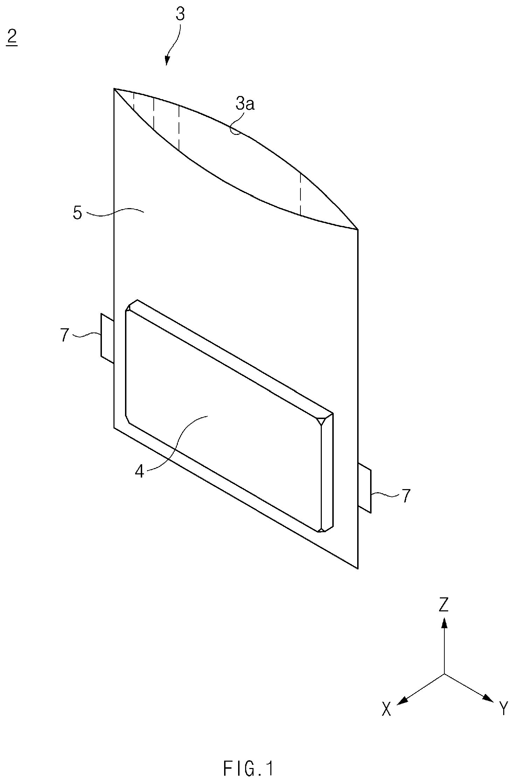

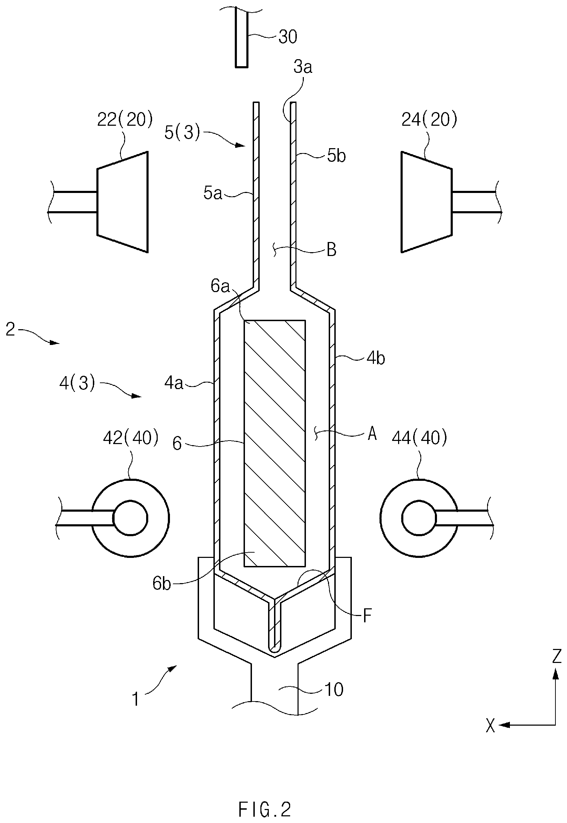

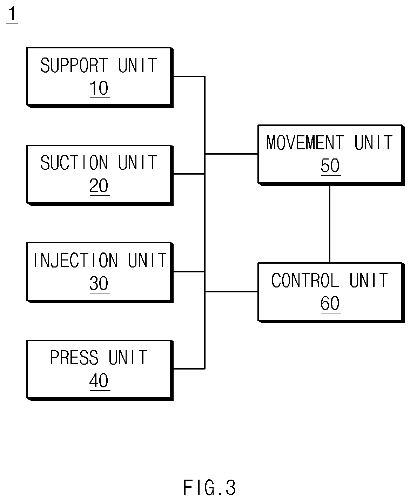

FIG. 1 is a perspective view of a semi-assembly that is used to manufacture a secondary battery by a secondary battery manufacturing apparatus according to an embodiment of the present disclosure when viewed from above. FIG. 2 is a diagram schematically showing the secondary battery manufacturing apparatus and the semi-assembly according to an embodiment of the present disclosure. In this instance, the semi-assembly is shown in cross section to make the inside visible. FIG. 3 is a schematic block diagram of the secondary battery manufacturing apparatus according to an embodiment of the present disclosure.

FIGS. 2 and 3 show the secondary battery manufacturing apparatus 1 (hereinafter referred to as manufacturing apparatus) according to an embodiment of the present disclosure. Referring to FIGS. 2 and 3, the manufacturing apparatus 1 according to an embodiment of the present disclosure is an apparatus for manufacturing the secondary battery from the semi-assembly 2. In this instance, the secondary battery may be a pouch-type secondary battery including a pouch-shaped case accommodating an electrode assembly.

Hereinafter, before describing the manufacturing apparatus according to an embodiment of the present disclosure, the semi-assembly on which the work is done by the manufacturing apparatus according to an embodiment of the present disclosure will be described. FIGS. 1 and 2 show the semi-assembly 2 on which the work is done by the manufacturing apparatus.

In the present disclosure, the semi-assembly 2 may include a case 3 having an accommodation space A and an electrode assembly 6 disposed in the accommodation space A. The case 3 may include an accommodation portion 4 and a gas collection portion 5.

In the present disclosure, the accommodation portion 4 may be formed by sealing a pouch sheet. In this instance, the pouch sheet may have a multilayer structure. As a non-limiting example, the pouch sheet may include a metal layer and a non-metal layer that covers two surfaces of the metal layer, and the material of the metal layer may be aluminum (Al), and the material of the non-metal layer may be polymer such as PET.

In the present disclosure, the accommodation portion 4 may be formed by sealing the edges of a first surface 4a and a second surface 4b that are formed of the pouch sheet, with the first surface 4a and the second surface 4b stacked parallel to each other.

More specifically, as shown, the accommodation portion 4 may be formed by sealing the edge extended in the left-right direction (Y-axis direction) at the lower side of the first surface 4a and the second surface 4b (negative direction of the Z axis), the edge extended in the top-bottom direction (Z-axis direction) at the left side (negative direction of the Y axis), and the edge extended in the top-bottom direction (Z-axis direction) at the right side (positive direction of the Y axis).

Accordingly, the accommodation portion 4 may have the accommodation space A between the first surface 4a and the second surface 4b. In this instance, the accommodation space A may be in communication with the outside through the unsealed edge of the accommodation portion 4. As shown, the accommodation space A may be in communication with the outside through the top connected to the gas collection portion 5 as described below.

In this instance, a part of the accommodation space A may be defined by a bottom surface F. The bottom surface F may be an area of the inner surface of the accommodation portion 4 as far away from an opening 3a as possible. As shown, the top of the accommodation space A may be connected to the opening 3a disposed at the gas collection portion 5, and the bottom of the accommodation space A may be surrounded by the bottom surface F. The bottom surface F may be extended in the left-right direction (Y-axis direction) at the lower side of the accommodation space A.

In the present disclosure, the gas collection portion 5 may be extended from the accommodation portion 4. Additionally, the opening 3a may be disposed at the end of the accommodation portion 4. In this instance, the gas collection portion 5 may be formed by sealing the pouch sheet, in the same way as the accommodation portion 4.

In the present disclosure, the gas collection portion 5 may be formed by sealing the edges of a first surface 5a and a second surface 5b that are formed of the pouch sheet, with the first surface 5a and the second surface 5b stacked parallel to each other.

More specifically, as shown, the gas collection portion 5 may be formed by sealing the edge extended in the top-bottom direction (Z-axis direction) at the left side of the first surface 5a and the second surface 5b (negative direction of the Y axis), and the edge extended in the top-bottom direction (Z-axis direction) at the right side (positive direction of the Y axis).

In this instance, the first surface 5a and the second surface 5b of the gas collection portion 5 may be connected to the first surface 4a and the second surface 4b of the accommodation portion 4, respectively. More specifically, the first surface 5a of the gas collection portion 5 and the first surface 4a of the accommodation portion 4 may be connected to each other, and the second surface 5b of the gas collection portion 5 and the second surface 4b of the accommodation portion 4 may be connected to each other.

Accordingly, a gas collection space B may be formed between the first surface 5a and the second surface 5b of the gas collection portion 5. The gas collection space B may communicate the accommodation space A with the opening 3a of the case 3.

In the present disclosure, the electrode assembly 6 may be disposed in the accommodation space A. The electrode assembly 6 may include a positive electrode, a negative electrode and a separator that separates them. The electrode assembly 6 may perform the charge and discharge function when it is impregnated with an electrolyte solution as described below. The electrode assembly 6 may be classified into a jelly roll type, a stack type, a stack-and-folding type and so on, according to the manufacturing process or structure, but the type is not limited to a particular one.

Hereinafter, an upper part of the electrode assembly 6 close to the opening 3a is referred to as an opening-side part 6a, and a lower part of the electrode assembly 6 that contacts or faces the bottom surface F is referred to as a bottom-side part 6b. The opening-side part 6a and the bottom-side part 6b may be on opposite sides in the top-bottom direction.

In the present disclosure, the semi-assembly 2 may include an electrode lead 7. The electrode lead 7 may be configured to electrically connect the electrode assembly 6 to the outside. As a non-limiting example, the electrode lead 7 may be formed of a conductive film that is connected to the electrode assembly 6 and extended outward from the case 3, but the shape or type is not limited to a particular one and may include any shape or type that electrically connects the electrode assembly 6 to the outside.

In this instance, the electrode lead 7 may include a pair of electrode leads. Additionally, each of the pair of electrode leads 7 may be connected to each of the positive electrode and the negative electrode of the electrode assembly 6. As shown, the pair of electrode leads 7 may be extended opposite each other with the case 3 interposed therebetween. The position and extension direction of the electrode leads 7 may be appropriately changed according to need.

Hereinafter, the configuration of the manufacturing apparatus according to an embodiment of the present disclosure will be described in more detail.

Referring to FIGS. 2 and 3, the manufacturing apparatus 1 according to an embodiment of the present disclosure may include a support unit 10. The support unit 10 may be configured to support the semi-assembly 2.

In this embodiment, the support unit 10 may be a frame that is spread apart in the front-rear direction (X-axis direction) and opens at top (positive direction of the Z axis) so that the lower part of the semi-assembly 2 may be inserted. However, the shape or structure of the support unit 10 is not limited to a particular one and may include any shape or structure for supporting the semi-assembly 2.

The manufacturing apparatus 1 according to an embodiment of the present disclosure may include a suction unit 20. The suction unit 20 may be configured to widen the gap between an inner surface of the case 3 and the electrode assembly 6. In this instance, the inner surface of the case 3 may be an inner surface of the accommodation portion 4. This may be to allow an injection unit 30 as described below to easily go into the gap in the accommodation space A.

In this embodiment, the suction unit 20 may include a suction pad having the ability to hold tight on an outer surface of the gas collection portion 5 by suction force. In such a state that the suction unit 20 holds tight on the outer surface of the gas collection portion 5 by suction force, when the suction unit 20 moves in the front-rear direction (X-axis direction) away from the semi-assembly 2, the gap may be widened.

In this instance, in this embodiment, the suction unit 20 may include a first suction unit 22 and a second suction unit 24 that hold tight on the first surface 5a and the second surface 5b of the gas collection portion 5 by suction force, respectively. In such a state that the first suction unit 22 and the second suction unit 24 hold tight on the first surface 5a and the second surface 5b, respectively, when the first suction unit 22 and the second suction unit 24 are moved away from each other in a direction away from each other, the gap may be widened.

Although this embodiment describes that the suction unit 20 holds tight on the outer surface of the gas collection portion 5 by suction force, the suction unit 20 may be configured to hold tight on the other component of the case 3 by suction force, according to need. For example, the suction unit 20 may be configured to hold tight on an outer surface of the accommodation portion 4 by suction force.

Although this embodiment describes that the suction unit 20 includes the suction pad that holds tight on an object using negative pressure, the detailed structure of the suction unit 20 is not limited to a particular one and may include any structure for holding tight on the outer surface of the gas collection portion 5. For example, the suction unit 20 may be replaced with a gripper that grasps or releases the outer surface of the gas collection portion 5.

The manufacturing apparatus 1 according to an embodiment of the present disclosure may include the injection unit 30. The injection unit 30 may be configured to inject the electrolyte solution into the accommodation space A. As shown, the injection unit 30 may be where the electrolyte solution is poured out through an injection pipe.

As an example, the injection unit 30 is an end portion of the injection pipe having an outlet. When the injection unit 30 is placed in the accommodation space A and pours the electrolyte solution through the outlet, the accommodation space A may be filled with the electrolyte solution.

In this instance, although not shown, the manufacturing apparatus 1 may further include a tank in which the electrolyte solution is stored for the operation of the injection unit 30, and a pump for transferring the electrolyte solution from the tank to the injection unit 30.

Meanwhile, in this embodiment, the injection unit 30 may be configured to move in relation to the semi-assembly 2. The injection unit 30 may make relative movement in the top-bottom direction (Z-axis direction) closer to the opening 3a of the case 3. The relative movement may be achieved by a movement unit 50 as described below. This configuration may be intended to thoroughly fill the accommodation space A with the electrolyte solution in order to achieve effective impregnation of the electrode assembly 6.

Describing in more detail, the injection unit 30 may be disposed adjacent to the bottom surface F in the accommodation space A. In other words, the injection unit 30 may be disposed closer to the bottom-side part 6b of the electrode assembly 6 than the opening-side part 6a.

As the injection unit 30 may pour the electrolyte solution into the accommodation space A in the above-described placement, the space close to the bottom surface F may be thoroughly filled with the electrolyte solution. When the injection unit 30 pours the electrolyte solution at a location far away from the bottom surface F, some lower areas of the accommodation space A may not be filled with the electrolyte solution. This is because air bubbles may be generated in the areas close to the bottom surface F while the electrolyte solution flows down to the lower side of the accommodation space A.

However, as this embodiment is configured such that the water level rises as the accommodation space A is filled with the electrolyte solution from the areas close to the bottom surface F, it may be possible to minimize bubble formation in the lower part of the accommodation space A and thoroughly fill the accommodation space A with the electrolyte solution.

Subsequently, in this embodiment, during the relative movement of the injection unit 30 and the semi-assembly 2 so that the injection unit 30 and the opening 3a of the case 3 get closer to each other, the injection unit 30 may pour the electrolyte solution.

Through this, the injection unit 30 may thoroughly fill the accommodation space A with the electrolyte solution from the areas close to the bottom surface F. In this instance, the speed at which the injection unit 30 moves may be equal to or more than the speed at which the level of the electrolyte solution rises in the accommodation space A.

The injection unit 30 may be configured to gradually fill the accommodation space A from the bottom surface F by the movement made as described below.

First, the injection unit 30 may pour the electrolyte solution at a fixed height far away from the bottom surface F by a predetermined distance, and when the level of the electrolyte solution reaches a predetermined height, may stop pouring the electrolyte solution. Additionally, the injection unit 30 may move to a height far away from the surface of the electrolyte solution by a predetermined distance, and pour the electrolyte solution again. The above-described process may be repeatedly performed until the accommodation space A is filled with the electrolyte solution.

Meanwhile, referring back to FIGS. 2 and 3, the manufacturing apparatus 1 according to an embodiment of the present disclosure may include a press unit 40. The press unit 40 may be configured to apply pressure to the outer surface of the case 3 toward the electrode assembly 6 so that the electrode assembly 6 is impregnated with the electrolyte solution injected into the accommodation space A.

In this embodiment, position adjustment may be performed to allow the press unit 40 to apply pressure to the outer surface of the case 3 at a location between the injection unit 30 and the bottom surface F of the accommodation space A. This may be to intensively apply pressure to the areas filled with the electrolyte solution in the accommodation space A. This is because the electrolyte solution poured from the injection unit 30 fills the accommodation space A from the bottom surface F by gravity.

In this instance, in this embodiment, the press unit 40 may include a first press unit 42 and a second press unit 44 to apply pressure to two sides of the case 3, respectively. The first press unit 42 may be configured to apply pressure to the first surface 4a of the accommodation portion 4, and the second press unit 44 may be configured to apply pressure to the second surface 4b of the accommodation portion 4. Accordingly, the accommodation space A may be subjected to pressure on the two sides, thereby achieving more effective impregnation of the electrode assembly 6.

Meanwhile, in this embodiment, the first and second press units 42, 44 may be configured to move in relation to the semi-assembly 2 while applying pressure to the outer surface of the case 3. The relative movement may be achieved by the movement unit 50 as described below.

The first and second press units 42, 44 may make relative movement in the top-bottom direction (Z-axis direction) closer to the opening 3a of the case 3. Accordingly, the first and second press units 42, 44 may intensively cause a part of the electrode assembly 6 to be impregnated, following the level (or surface) of the electrolyte solution filled in the accommodation space A. Accordingly, the electrode assembly 6 may be impregnated more effectively.

In this instance, in this embodiment, each of the first and second press units 42, 44 may include a press roller. Accordingly, with the relative movement of the first and second press units 42, 44 and the semi-assembly 2, the press roller may make a rolling motion on the outer surface of the case 3. Accordingly, damage to the case 3 caused by the relative movement may be minimized.

Referring back to FIGS. 2 and 3, the manufacturing apparatus 1 according to an embodiment of the present disclosure may include the movement unit 50. The movement unit 50 may be configured to achieve the relative movement (hereinafter referred to as first relative movement) between the injection unit 30 and the semi-assembly 2 and the relative movement (hereinafter referred to as second relative movement) between the press unit 40 and the semi-assembly 2. To this end, the movement unit 50 may include a predetermined actuator (not shown) such as a motor or a hydraulic cylinder.

In this embodiment, the movement unit 50 may be formed with various structures for achieving the first relative movement and the second relative movement.

As an example, the first and second relative movements may be simultaneously achieved by one movement unit 50. This provides a more simple and compact design advantage of the movement unit 50.

To this end, the movement unit 50 may include the actuator and connectors operably connecting the actuator to the support unit 10. The first and second relative movements may be achieved only by moving the semi-assembly 2 supported by the support unit 10. Alternatively, the movement unit 50 may include the actuator, connector operably connecting the actuator to the injection unit 30, and connectors operably connecting the actuator to the press unit 40.

As another example, the first and second relative movements may be achieved by multiple movement units 50. This provides an advantage that the movement unit 50 may individually adjust and control the first and second relative movements more precisely.

To this end, the movement unit 50 may include a first movement unit for achieving the first relative movement and a second movement unit for achieving the second relative movement. The first movement unit may include a first actuator and connectors operably connecting the first actuator to the injection unit 30, and the second movement unit may include a second actuator and connectors operably connecting the second actuator to the press unit 40.

Referring back to FIG. 3, the manufacturing apparatus 1 according to an embodiment of the present disclosure may include a control unit 60. The control unit 60 may be configured to control the other components of the manufacturing apparatus 1. For example, the control unit 60 may be configured to control the operation of at least one of the suction unit 20, the injection unit 30, the press unit 40 or the movement unit 50.

To this end, the control unit 60 may include, but is not limited to, circuitry, a processor, a central processing unit (CPU), a controller, an arithmetic logic unit, an operational logic circuit, a digital signal processing device, a microcomputer, a field programmable gate array (FPGA), a system-on-chip (SoC), a programmable logic unit, a microprocessor or any other device capable of performing the functions as described below.

As described above, the manufacturing apparatus 1 according to an embodiment of the present disclosure may thoroughly fill the accommodation space A with the electrolyte solution from the bottom surface F by the relative movement of the injection unit 30 and the semi-assembly 2. In addition, the manufacturing apparatus 1 may apply pressure to the case 3 with the press unit 40 to enhance the infiltration of the electrolyte solution into the electrode assembly 6. Through this, the manufacturing apparatus 1 may achieve effective impregnation of the electrode assembly 6.

Hereinafter, the manufacturing apparatus according to another embodiment of the present disclosure will be described with varying drawings.

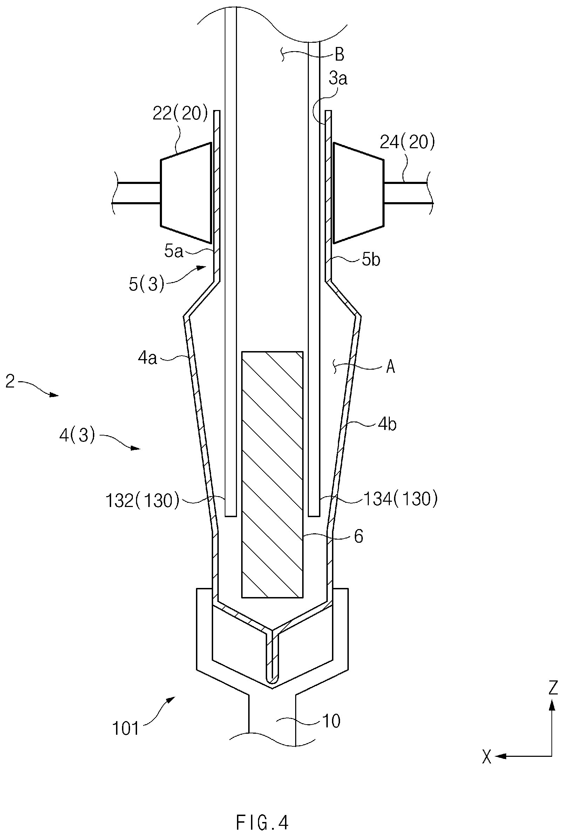

FIG. 4 is a diagram schematically showing that the injection unit of the secondary battery manufacturing apparatus according to another embodiment of the present disclosure is disposed in the accommodation space. In this instance, the semi-assembly is shown in cross section to make the inside visible. In this instance, the same reference numerals as the reference numerals in the previous drawings indicate the same elements that perform the same functions.

FIG. 4 shows the manufacturing apparatus 101 according to another embodiment of the present disclosure. Referring to FIG. 4, the injection unit 130 of the manufacturing apparatus 101 according to another embodiment of the present disclosure may include a plurality of injection units. Accordingly, the accommodation space A may be filled with the electrolyte solution more quickly.

As shown, in this embodiment, the injection unit 130 may include a first injection unit 132 and a second injection unit 134. In this instance, the first injection unit 132 and the second injection unit 134 may be arranged with the electrode assembly 6 therebetween. In other words, the first injection unit 132 may be disposed between the first surface 4a of the accommodation portion 4 and the electrode assembly 6, and the second injection unit 134 may be disposed between the second surface 4b of the accommodation portion 4 and the electrode assembly 6. Through this, the two surfaces of the electrode assembly 6 may be impregnated with the electrolyte solution quickly and efficiently.

Hereinafter, a secondary battery manufacturing method (hereinafter referred to as manufacturing method) according to an embodiment of the present disclosure will be described with varying drawings.

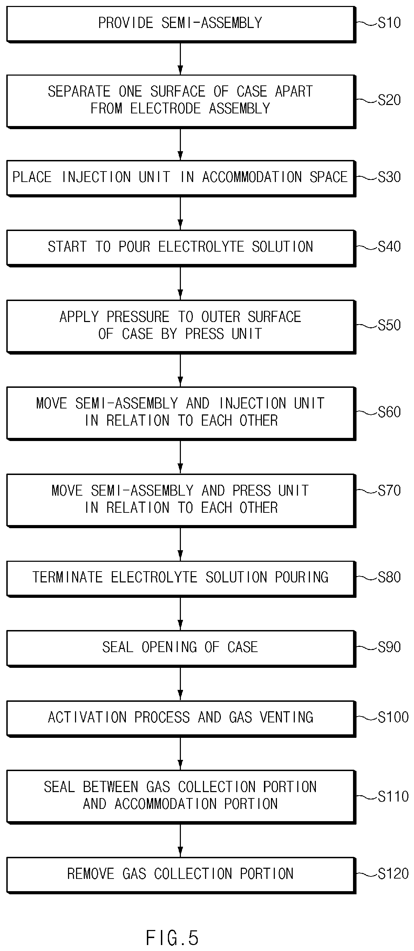

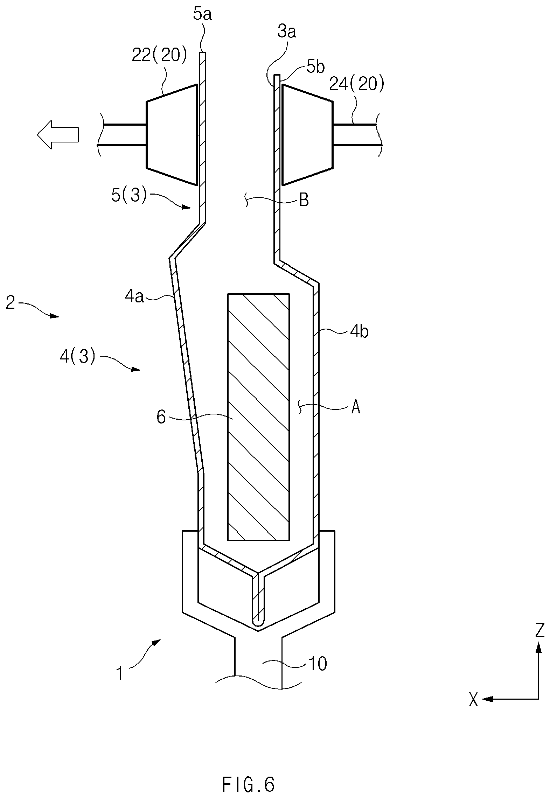

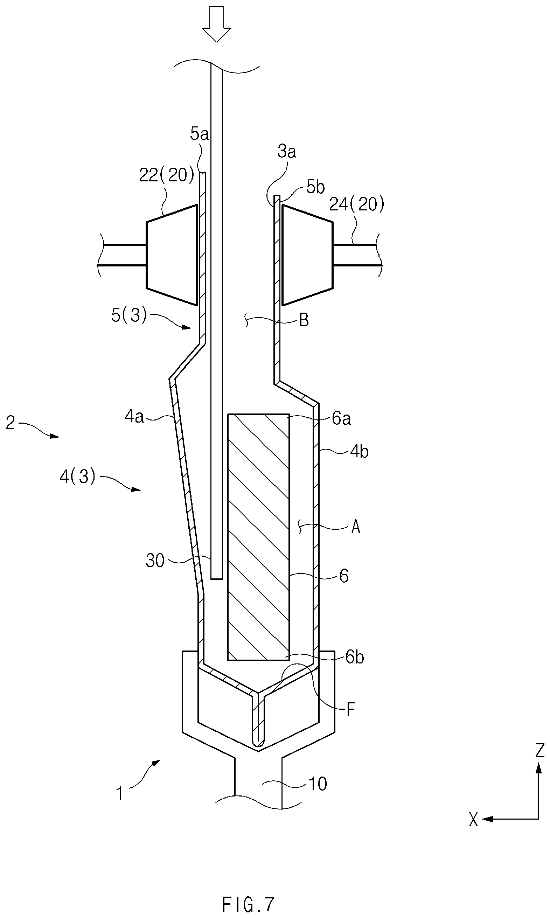

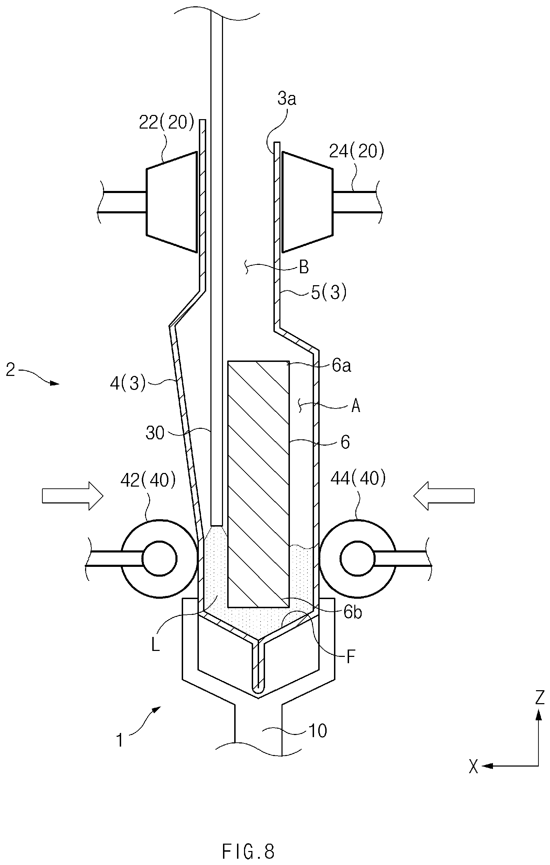

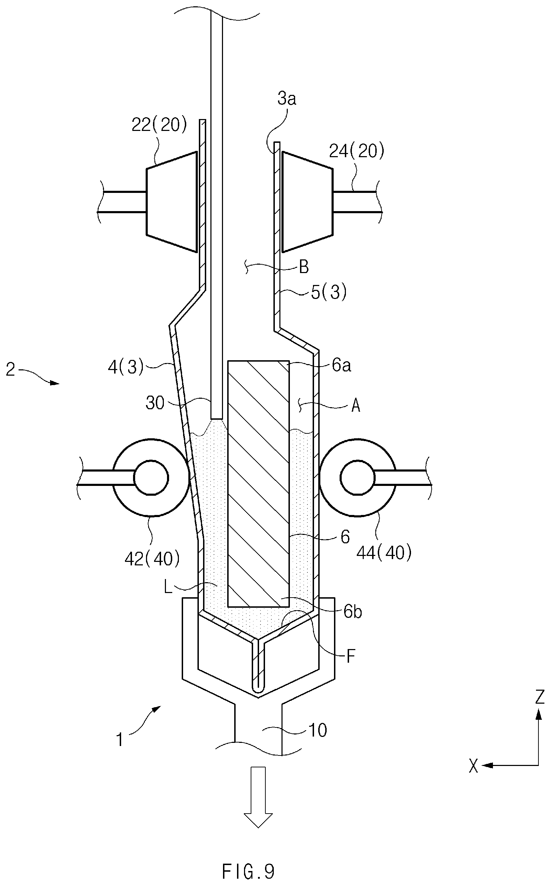

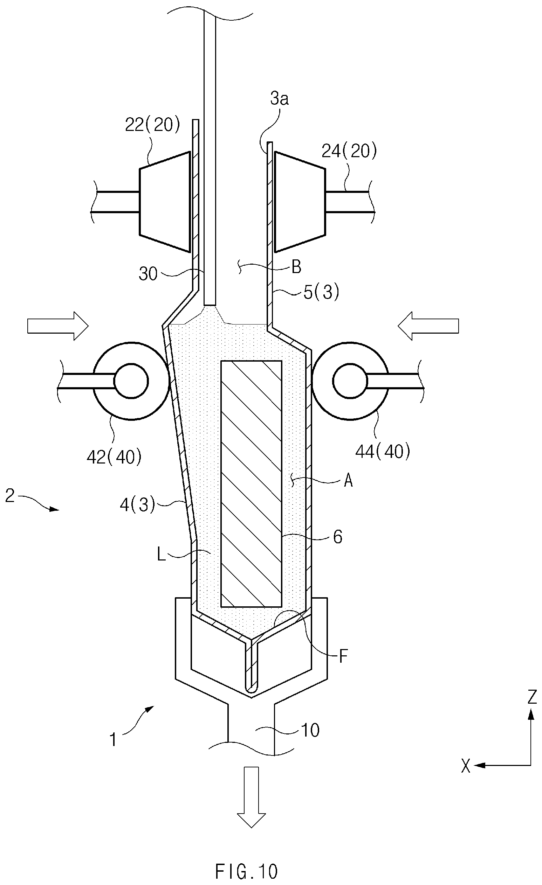

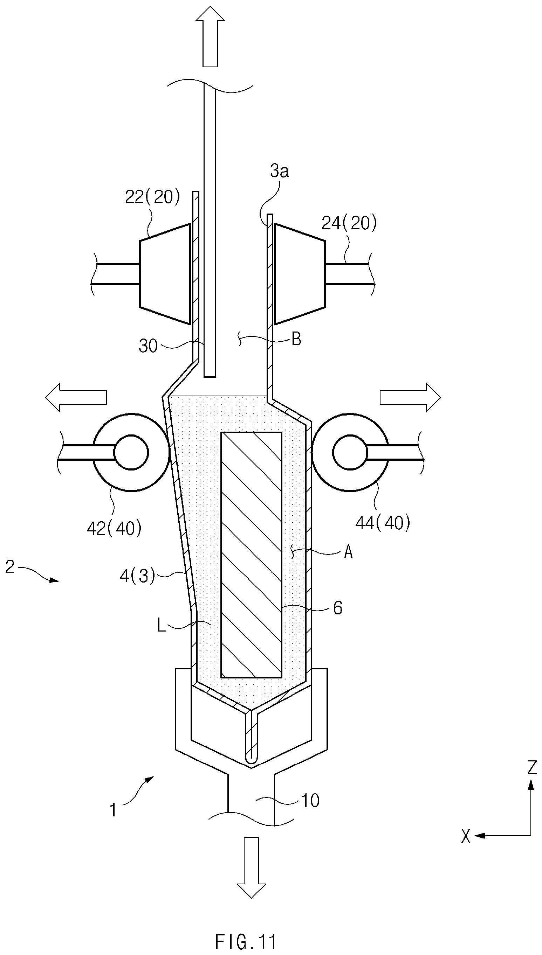

FIG. 5 is a flowchart of the secondary battery manufacturing method according to an embodiment of the present disclosure. FIG. 6 is a diagram schematically showing the process in which the grip unit of the secondary battery manufacturing apparatus according to an embodiment of the present disclosure spreads the case apart. FIG. 7 is a diagram schematically showing the process in which the injection unit of the secondary battery manufacturing apparatus according to an embodiment of the present disclosure is inserted into the accommodation space. FIG. 8 is a diagram schematically showing the process in which the impregnation solution is poured into the accommodation space from the injection unit of the secondary battery manufacturing apparatus according to an embodiment of the present disclosure and the press unit applies pressure to the case. FIGS. 9 and 10 are diagrams schematically showing the process in which the movement unit of the secondary battery manufacturing apparatus according to an embodiment of the present disclosure moves the injection unit, the press unit and the semi-assembly in relation to each other. FIG. 11 is a diagram schematically showing the process in which the injection unit and the press unit of the secondary battery manufacturing apparatus according to an embodiment of the present disclosure are moved apart from the semi-assembly. In this instance, in FIGS. 6 to 11, the semi-assembly is shown in cross section to make the inside visible.

Referring to FIGS. 1 and 5, the manufacturing method according to an embodiment of the present disclosure may be a method for manufacturing a secondary battery from the semi-assembly 2. In this instance, the manufacturing method according to an embodiment of the present disclosure may be performed by the above-described manufacturing apparatus according to an embodiment of the present disclosure.

Referring to FIGS. 5 and 6, the manufacturing method according to an embodiment of the present disclosure includes providing the semi-assembly 2 (S10), and separating, by the suction unit 20, one surface of the case 3 apart from the electrode assembly 6 to widen the gap between them (S20).

In this instance, in this embodiment, one surface of the case 3 may be the first surface 4a of the accommodation portion 4. Additionally, in the step S20, to widen the gap between the first surface 4a of the accommodation portion 4 and the electrode assembly 6, the first suction unit 22 may be moved forward (in the positive direction of the X axis) far away from the gas collection portion 5 while holding tight on the first surface 5a of the gas collection portion 5 by suction force, and the second suction unit 24 may be fixed in place while holding tight on the second surface 5b of the gas collection portion 5 by suction force.

Referring to FIGS. 5 and 7, the manufacturing method according to an embodiment of the present disclosure includes widening the gap between one surface of the case 3 and the electrode assembly 6 (S20), and placing the injection unit 30 in the accommodation space A through the opening 3a of the case 3 (S30).

In this instance, in the step S30 of the manufacturing method according to the present embodiment, the injection unit 30 may be placed in between the first surface 4a of the accommodation portion 4 and the electrode assembly 6 formed in the step S20. The injection unit 30 may be placed in the accommodation space A through the space formed in the step S20 more easily.

In this instance, in the step S30 of the manufacturing method according to the present embodiment, the injection unit 30 may be placed adjacent to the bottom surface F of the accommodation space A. In other words, the injection unit 30 may be placed closer to the bottom-side part 6b than the electrode-side part 6a.

Referring to FIGS. 5 and 8, the manufacturing method according to an embodiment of the present disclosure includes placing the injection unit 30 in the accommodation space A (S30), and starting to pour the electrolyte solution L from the injection unit 30 into the accommodation space A (S40).

In this instance, in this embodiment, because the injection unit 30 is disposed adjacent to the bottom surface F in the step S30, the electrolyte solution L poured from the injection unit 30 may thoroughly fill the accommodation space A from the areas close to the bottom surface F.

Additionally, the manufacturing method according to an embodiment of the present disclosure includes starting to pour the electrolyte solution L (S30), and applying, by the press unit 40, pressure to the outer surface of the case 3 toward the electrode assembly 6 (S50). This is to achieve effective infiltration of the electrolyte solution L into the electrode assembly 6.

In this instance, in step S50 of the manufacturing method according to an embodiment of the present disclosure, the press unit 40 may apply pressure to the electrode assembly 6 at a location between the bottom surface F and the injection unit 30 in the top-bottom direction (Z-axis direction). Accordingly, the areas adjacent to the bottom surface F where the electrolyte solution L is filled the earliest in the accommodation space A may be intensively subjected to pressure by the press unit 40.

In this instance, in the step S50 of the manufacturing method according to an embodiment of the present disclosure, pressure may be applied to two sides of the case 3 by the first press unit 42 and the second press unit 44, respectively. Accordingly, the internal pressure of the accommodation space A may be increased, and the electrode assembly 6 may be impregnated with the electrolyte solution L more effectively.

Referring to FIGS. 5, 9 and 10, the manufacturing method according to an embodiment of the present disclosure includes starting to pour the electrolyte solution L (S30), and moving the injection unit 30 and the semi-assembly 2 in relation to each other while the electrolyte solution L is poured from the injection unit 30 (S60). Accordingly, the accommodation space A may be thoroughly filled with the electrolyte solution L by the injection unit 30.

Hereinafter, the relative movement made in the step S60 is referred to as the first relative movement. In this instance, in the step S60 according to this embodiment, the first relative movement may be performed as the support unit 10 supporting the semi-assembly 2 is moved downward (in the negative direction of the Z-axis) by the movement unit.

Meanwhile, in the step S60 of the manufacturing method according to an embodiment of the present disclosure, the first relative movement may be made in a direction in which the injection unit 30 and the opening 3a of the case 3 get closer to each other. The speed of the first relative movement may be equal to or more than the speed at which the level (or surface) of the electrolyte solution L rises in the accommodation space A.

Through this, the injection unit 30 may pour the electrolyte solution L at the predetermined distance above the level (or surface) of the electrolyte solution L (in the positive direction of the Z-axis) without being submerged in the electrolyte solution L. Accordingly, the injection of the injection unit 30 may be performed more smoothly.

Referring back to FIGS. 5, 9 and 10, the manufacturing method according to an embodiment of the present disclosure includes applying, by the press unit 40, pressure to the outer surface of the case 3 (S50), and moving the press unit 40 and the semi-assembly 2 in relation to each other (S70). Accordingly, the filling operation may be performed while pressure is applied over the entire electrode assembly 6.

Hereinafter, the relative movement made in the step S70 is referred to as the second relative movement. In this instance, in the step S70 according to this embodiment, the second relative movement may be performed as the support unit 10 supporting the semi-assembly 2 is moved downward (in the negative direction of the Z-axis) by the movement unit.

In this instance, in the step S70 of the manufacturing method according to an embodiment of the present disclosure, the second relative movement may be performed in the top-bottom direction (Z-axis direction) so that the press unit 40 and the opening 3a of the case 3 get closer to each other. Accordingly, the press unit 40 may apply pressure over the entire outer surface of the case 3 along a direction in which the level (or surface) of the electrolyte solution L rises.

In this instance, the step S70 of the manufacturing method according to an embodiment of the present disclosure may start simultaneously with or after the start of the step S60. In other words, at least part of the steps S60 and S70 may overlap. In this instance, the part may refer to a predetermined time interval. Through this, the press unit 40 may apply pressure over the entire outer surface of the case 3, following the rising level (or surface) of the electrolyte solution L.

Referring to FIG. 5 and FIG. 11, the manufacturing method according to an embodiment of the present disclosure includes moving the injection unit 30 and the semi-assembly 2 in relation to each other (S60), and when an optimal amount of electrolyte solution L is filled in the accommodation space A, terminating the pouring of the electrolyte solution L and removing the injection unit 30 from the case 3 (S80). The total amount of the electrolyte solution L injected may be appropriately set according to need. In this instance, the press unit 40 may stop applying pressure to the outer surface of the case 3 and move away from the semi-assembly 2.

Additionally, the manufacturing method according to an embodiment of the present disclosure includes sealing the opening 3a of the case 3 to isolate the accommodation space A and the gas collection space B from the outside (S90), and performing an activation process for charging and discharging the electrode assembly 6 and venting gas generated during the activation process to the outside of the case 3 (S100). In this instance, in the step S100, to vent the gas to the outside of the case 3, a hole may be formed in the gas collection portion 5 or a part of the gas collection portion 5 may be cut.

Additionally, referring to FIGS. 1, 2 and 5, the manufacturing method according to an embodiment of the present disclosure includes venting the gas during the activation process (S100), and forming a seal between the accommodation portion 4 and the gas collection portion 5 to isolate the accommodation space A from the gas collection space B (S110).

More specifically, in the step S110, on the basis of FIGS. 1 and 2, the edge extended in the left-right direction (Y-axis direction) at the upper side of the accommodation portion 4 (positive direction of the Z-axis) may be sealed. Accordingly, the accommodation space A and the electrode assembly 6 and the electrolyte solution accommodated in the accommodation space A may be isolated from the outside. Additionally, the gas collection portion 5 is removed (S120). To this end, cutting may be performed between the accommodation portion 4 and the gas collection portion 5.

As described above, in the manufacturing method according to an embodiment of the present disclosure, through the steps S30 and S60, the accommodation space A may be thoroughly filled with the electrolyte solution L. Additionally, through the steps S50 and S70, the pressure rise in the accommodation space A may be induced to facilitate easy infiltration of the electrolyte solution L into the electrode assembly 6. Through this, the manufacturing method may achieve more effective impregnation of the electrode assembly 6.

In this instance, the steps S60 and S70 may be performed independently. For example, as described in this embodiment, both the relative movement between the semi-assembly and the injection unit (step S60) and the relative movement between the semi-assembly and the press unit (step S70) may be made, but in another embodiment, only the relative movement between the semi-assembly and the injection unit may be made, and the semi-assembly and the press unit may be relatively fixed in place, and in still another embodiment, only the relative movement between the semi-assembly and the press unit may be made, and the semi-assembly and the injection unit may be relatively fixed in place.

Although it has been described that the manufacturing method according to an embodiment of the present disclosure is performed by the manufacturing apparatus according to an embodiment of the present disclosure, the manufacturing method according to an embodiment of the present disclosure may be performed by any other apparatus than the manufacturing apparatus. Alternatively, at least one step of the manufacturing method according to an embodiment of the present disclosure may be manually performed by an operator.

Although the present disclosure has been hereinabove described with regard to a limited number of embodiments and drawings, the present disclosure is not limited thereto, and may be embodied in different forms by persons having ordinary skill in the technical field pertaining to the present disclosure within the technical aspect of the present disclosure and the appended claims and their equivalent scope.

### [List of Reference Numerals]

1: Secondary battery manufacturing apparatus
2: Semi-assembly
10: Support unit
20: Suction unit
30, 130: Injection unit
40: Press unit
50: Movement unit
60: Control unit
A: Accommodation space
B: Gas collection space

## Claims

1. A secondary battery manufacturing apparatus for manufacturing a secondary battery with a semi-assembly including a case having an accommodation space and an electrode assembly disposed in the accommodation space, the secondary battery manufacturing apparatus comprising:
a support unit configured to support the semi-assembly;
an injection unit configured to inject an electrolyte solution into the accommodation space; and
a first movement unit configured to move the semi-assembly and the injection unit in relation to each other while the electrolyte solution is poured from the injection unit into the accommodation space.

2. The secondary battery manufacturing apparatus according to claim 1,
wherein when the injection unit injects the electrolyte solution, the first movement unit moves at least one of the injection unit or the semi-assembly so that the injection unit and an opening of the case get closer to each other.

3. The secondary battery manufacturing apparatus according to claim 1,
wherein the injection unit starts to inject the electrolyte solution in such a state in which the injection unit is disposed closer to a bottom-side part of the electrode assembly than an opening-side part,
wherein the opening-side part is a part facing an opening of the case, and
wherein the bottom-side part is another part opposite the opening-side part, the bottom-side part contacting or facing a bottom surface of the accommodation space.

4. The secondary battery manufacturing apparatus according to claim 1, further comprising:
a suction unit configured to widen a gap between an inner surface of the case and the electrode assembly so that the injection unit is inserted between the inner surface of the case and the electrode assembly.

5. The secondary battery manufacturing apparatus according to claim 1, wherein the injection unit includes:
first and second injection units arranged with the electrode assembly interposed therebetween.

6. The secondary battery manufacturing apparatus according to claim 1, further comprising:
a press unit configured to apply pressure to an outer surface of the case toward the electrode assembly so that the electrolyte solution injected from the injection unit infiltrates into the electrode assembly.

7. The secondary battery manufacturing apparatus according to claim 6,
wherein the press unit applies pressure to the outer surface of the case at a location between the injection unit and a bottom surface of the accommodation space.

8. The secondary battery manufacturing apparatus according to claim 6,
wherein the press unit includes:
first and second press units applying pressure to two sides of the case, respectively.

9. The secondary battery manufacturing apparatus according to claim 8,
wherein the first movement unit is configured to move the press unit and the semi-assembly in relation to each other.

10. The secondary battery manufacturing apparatus according to claim 8, further comprising:
a second movement unit configured to move the press unit and the semi-assembly in relation to each other.

11. The secondary battery manufacturing apparatus according to claim 10,
wherein the second movement unit moves at least one of the press unit or the semi-assembly so that the press unit and an opening of the case get closer to each other.

12. A secondary battery manufacturing apparatus for manufacturing a secondary battery with a semi-assembly including a case having an accommodation space and an electrode assembly disposed in the accommodation space, the secondary battery manufacturing apparatus comprising:
a support unit configured to support the semi-assembly;
an injection unit configured to inject an electrolyte solution into the accommodation space;
a press unit configured to apply pressure to an outer surface of the case toward the electrode assembly so that the electrolyte solution injected from the injection unit into the accommodation space infiltrates into the electrode assembly; and
a second movement unit configured to move the press unit and the semi-assembly in relation to each other while the pressure is applied to the case by the press unit.

13. A secondary battery manufacturing method, comprising the steps of:
providing a semi-assembly including a case having an accommodation space and an electrode assembly disposed in the accommodation space;
placing an injection unit in the accommodation space through an opening of the case; and
moving the injection unit and the semi-assembly in relation to each other while an electrolyte solution is poured from the injection unit.

14. The secondary battery manufacturing method according to claim 13,
wherein the step of moving the injection unit and the semi-assembly in relation to each other comprises moving in a direction in which the injection unit and the opening of the case get closer to each other.

15. The secondary battery manufacturing method according to claim 13, further comprising the step of:
widening a gap between an inner surface of the case and the electrode assembly,
wherein the step of placing the injection unit in the accommodation space comprises placing the injection unit between the inner surface of the case and the electrode assembly.

16. The secondary battery manufacturing method according to claim 13, further comprising the step of:
applying, by a press unit, pressure to an outer surface of the case toward the electrode assembly so that the electrolyte solution injected from the injection unit infiltrates into the electrode assembly.

17. The secondary battery manufacturing method according to claim 16,
wherein the press unit includes a first press unit and a second press unit, and
wherein the step of applying pressure to the outer surface of the case comprises applying, by the first press unit and the second press unit, pressure to two sides of the case, respectively.

18. The secondary battery manufacturing method according to claim 16,
wherein at the step of moving the injection unit and the semi-assembly in relation to each other, the press unit is moved in relation to the semi-assembly while applying pressure to the case.

19. The secondary battery manufacturing method according to claim 16, further comprising the step of:
moving the press unit and the semi-assembly in relation to each other while pressure is applied to the case by the press unit.

20. A secondary battery manufacturing method, comprising the steps of:
providing a semi-assembly including a case having an accommodation space and an electrode assembly disposed in the accommodation space;
injecting an electrolyte solution into the accommodation space through an opening of the case;
applying, by a press unit, pressure to an outer surface of the case toward the electrode assembly so that the electrolyte solution injected into the accommodation space infiltrates into the electrode assembly; and
moving the press unit and the semi-assembly in relation to each other while the pressure is applied to the case by the press unit.
